Europäisches Patentamt

European Patent Office

Office européen des brevets

(11) Publication number: **0 228 445**
**B1**

# EUROPEAN PATENT SPECIFICATION

(45) Date of publication of patent specification: **02.01.91**

(21) Application number: **86904448.7**

(22) Date of filing: **02.07.86**

(86) International application number:
**PCT/SE86/00323**

(87) International publication number:
**WO 87/00151 15.01.87 Gazette 87/01**

(51) Int. Cl.⁵: **B 65 G 5/00**

(54) PRINCIPLE FOR THE STORING OF GAS OR LIQUID.

(30) Priority: **03.07.85 SE 8503322**

(43) Date of publication of application:
**15.07.87 Bulletin 87/29**

(45) Publication of the grant of the patent:
**02.01.91 Bulletin 91/01**

(84) Designated Contracting States:
**AT BE CH DE FR GB IT LI NL SE**

(56) References cited:
**DE-A-2 753 881**
**FI-B- 67 427**
**GB-A-1 574 367**
**SE-A- 98 936**
**SE-A- 179 958**

(73) Proprietor: **Avesta Lining Aktiebolag**
**Box 23075, Sveavägen 163**
**S-104 35 Stockholm (SE)**

(72) Inventor: **Hahn, Torbjörn**
**Myggdalsvägen 77**
**S-135 42 Tyresö (SE)**

(74) Representative: **Hynell, Magnus**
**Hynell Patenttjänst AB Box 236**
**S-683 02 Hagfors (SE)**

Courier Press, Leamington Spa, England.

## Description

The present invention relates to a system for sealed lining of a rock chamber for storing liquid or gas, also under very high pressures, as defined in the preamble of claim 1.

GB-A-1 574 367 refers to underground storage of substances in permeable water bearing rock and relies on prefabricated concrete elements at some distance from the rock. There is no transmission of stresses to the rock. The internal pressure in the storage volume is balanced by applying a water pressure in the space between the concrete elements and the rock. Thus, this solution is not directed to the rock being a pressure absorbing means, but rather to the fact that the water pressure will balance the pressure in said space, and with a leakproof structure provided between the water volume and the stored substance.

According to the present invention as defined in claim 1 the storage space is lined with a sandwich construction comprising drainage material, concrete affixed to the wall, and a sealing membrane of e.g. stainless steel thin sheet.

By making a sealed lining in which the pressure from the product kept in the storage space is absorbed by the surrounding rock, it is possible to store gas or liquid under excess pressure at a considerably smaller depth below the ground surface than in an unlined storage space where the water pressure in the rock must be higher than the gas or liquid pressure from the product in the storage space. According to this application, the gas pressure or the liquid pressure is balanced by the rock volume.

The linings in the prior art should also be able to withstand a water pressure from the surrounding rock which is higher than the pressure in the storage space. Such loads occur, for example, when petroleum is stored below the phreatic surface or when storing gas after the storage space has been emptied.

To avoid the necessity of dimensioning for outside water pressure while being able to utilize the rock as a means for absorbing the inside pressure, the construction described below has been invented.

By this method, a natural gas store having an excess pressure of 80 bars can be located with a rock overburden of about 70-80 meters, whereas 800 meters are required if no lining is used.

The novel features of the invention are stated in the characterizing clause of claim 1.

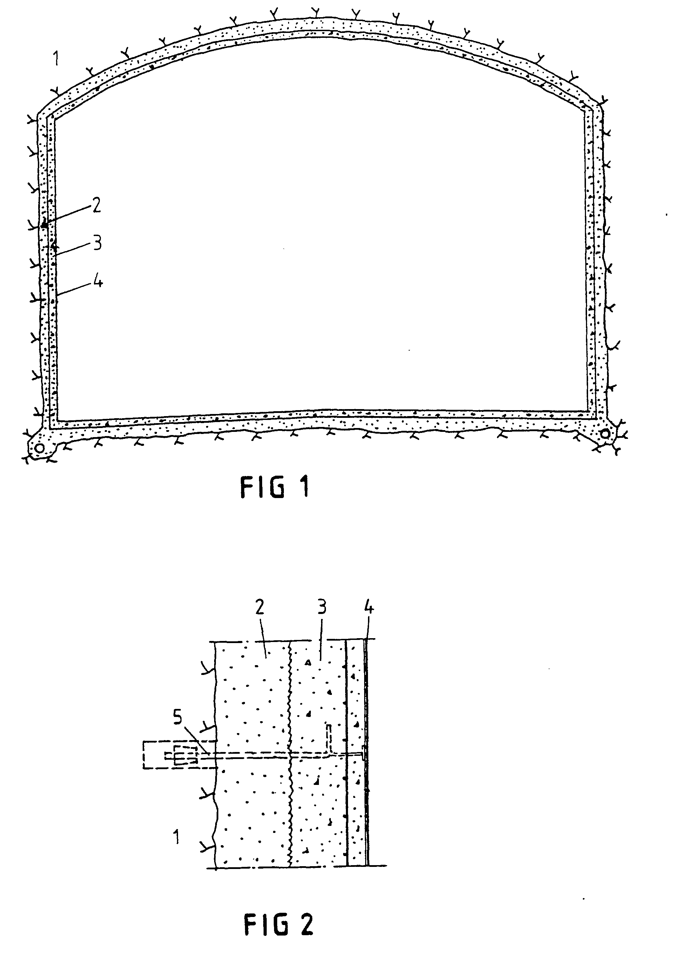

Fig. 1 is a cross-section of a storage space according to the invention;

Fig. 2 is an enlarged cross-section of a portion of the wall construction;

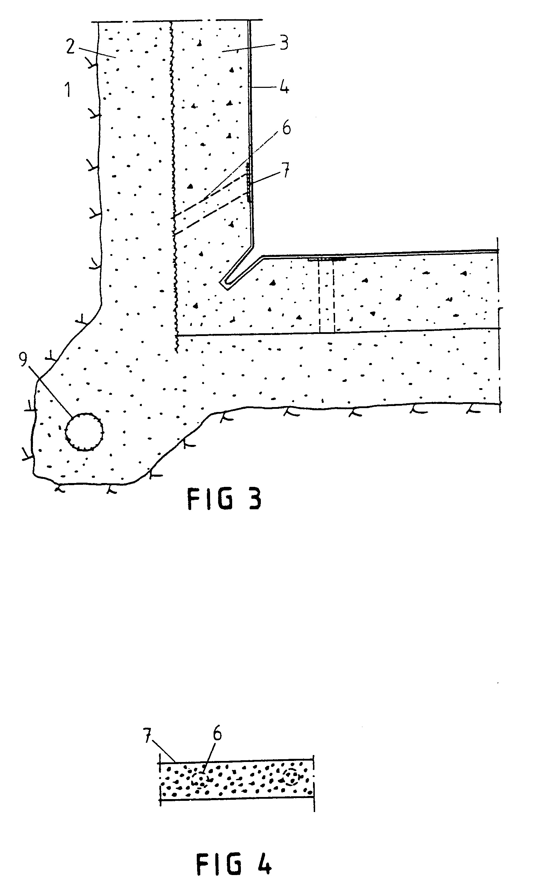

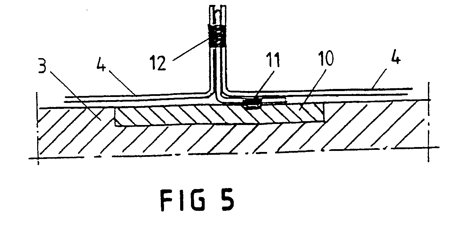

Fig. 3 is an enlarged cross-section of a portion of the transition between the wall and floor;

Fig. 4, on a larger scale, shows the part 7 as seen from inside the storage space; and

Fig. 5.

The construction comprises, in addition to rock 1, also a drainage layer 2 which is attached to the rock and which drains the water such that no outside pressure is exerted on the lining 3, 4. The drainage layer should also serve to transmit, upon a certain deformation, the pressure to the surrounding volumes. The drainage layer may consist of natural material, e.g. sand or equivalent material.

Inwardly of the drainage layer 2, concrete 3 is cast which is force-transmitting and serves as a base for the sealing means 4 which is a membrane 4 (e.g. stainless steel thin sheet). The concrete may be reinforced. The concrete is anchored in holes drilled in the rock by means of bolts. The bolts must be able to avoid cracking of the concrete around the bolts which are expansion-type bolts.

Since pressure can be transmitted to the rock via the concrete layer 3 and the drainage layer 2 and, also, the outside water pressure is removed by means of the continuous drainage layer 2, the sealing means 4 need not be dimensioned for this pressure.

By using a thin metal sheet, welding can be carried out by an automatic seam welding method, which is a known technique used in connection with, for example, roof coverings.

Sheets having a small thickness (about 0.4 mm) can be used.

By constructing the lining as a sealing means according to the present invention, two essential advantages are obtained:

1. It is possible to store petroleum products.

2. By using the volume of the rock for pressure absorption, it is possible to store e.g. pressurized gas at considerably smaller depth than when the water pressure is used to prevent gas or liquid from flowing out.

There are a number of lining systems, but none that combines force transmission and force deflection, i.e. ensures continuous drainage in a natural material, which also requires a construction withstanding the deformations which occur when the construction is subjected to pressure in the storage space, without jeopardizing the sealing means (the metal sheet).

## Claims

1. System for storing liquid or gas in a storage space in rock (1), comprising a concrete lining (3) disposed adjacent the rock, and sealing means (4) facing said storage space and comprising a plurality of joined together extensible thin sheets, characterized in that a drainage layer (2) of gravel or equivalent material is disposed between the rock (1) and said concrete (3) and is arranged to transmit the pressure exerted in the storage space to the rock by arranging that there is no gap between the drainage layer and the rock, and that the lining of concrete (3) is affixed by expansion bolts to the rock (1), said expansion bolts extending through said drainage layer (2) and having one end movably arranged in holes drilled in the rock in such a manner that they can move axially towards the rock when the concrete is loaded by the gas or liquid in said storage space.

2. System as claimed in claim 1, characterized in that the thin sheets are joined together by automatic resistance welding (e.g. seam welding) to an L-section which in turn is welded to a sheet-metal strip attached to the surface of the concrete.

## Patentansprüche

1. System zum Lagern von Flüssigkeit oder Gas in einem Lagerraum im Fels (1), umfassend eine an den Fels angrenzende Betonverkleidung (3) und zum Lagerraum hin angeordnete Dichtungsmittel sowie eine Vielzahl miteinander verbundener, dehnbarer dünner Lagen oder Bleche, dadurch gekennzeichnet, daß eine Drainageschicht (2) aus Kies oder äquivalentem Material zwischen dem Fels (1) und dem Beton (3) derart angeordnet ist, daß sie den im Lagerraum auftretenden Druck auf den Fels überträgt, indem kein Spalt zwischen der Drainageschicht und dem Fels vorgesehen wird, und daß die Betonverkleidung (3) durch Dehnungsbolzen am Fels (1) befestigt wird, wobei sich die Dehnungsbolzen durch die Drainageschicht (2) hindurch erstrecken und mit ihrem einen Ende bewegbar in Löchern angeordnet sind, die in solcher Weise in den Fels hineingebohrt sind, daß sie sich axial in Richtung auf den Fels zu bewegen können, wenn der Beton mit Gas oder Flüssigkeit im Lagerraum belastet wird.

2. System nach Anspruch 1, dadurch gekennzeichnet, daß die dünnen Lagen oder Bleche miteinander durch automatische Widerstandsschweißung (z.B. Nahtschweißung) zu einem L-Abschnitt verbunden werden, der wiederum an einen Blechstreifen angeschweißt ist, welcher an der Oberfläche des Betons befestigt ist.

## Revendications

1. Système de stockage de gaz ou de liquide dans un volume de stockage de la roche (1) comprenant un doublage en béton (3) placé adjacent à la roche, et un moyen d'étanchéité (4) orienté du côté dudit espace de stockage et comportant un ensemble de tôles minces extensibles assemblées entre elles, caractérisé par le fait qu'une couche de drainage (2) en gravier ou en matériau équivalent est disposée entre la roche (1) et ledit béton (3) et agencée pour transmettre la pression exercée sur la roche par le volume de stockage en prévoyant qu'il n'y a aucun interstice entre la couche de drainage et la roche, et en prévoyant que le doublage de béton (3) soit fixé par des boulons de scellement à la roche (1), lesdits boulons de scellement traversant ladite couche de drainage (2) et ayant une extrémité agencée en restant mobile dans des orifices percés dans la roche de manière à pouvoir se déplacer dans la direction axiale vers l'intérieur de la roche quand le béton est chargé par le gaz ou par le liquide qui se trouve dans ledit volume de stockage.

2. Système selon la revendication 1, caractérisé par le fait que les tôles minces sont assemblées par un soudage automatique à résistance (par exemple soudage en filet) à des sections en L qui sont à leur tour soudées à une bande de tôle métallique fixée à la surface du béton.

FIG 1

FIG 2

FIG 3

FIG 4

2

FIG 5